# EUROPÄISCHE PATENTANMELDUNG

(11) **EP 1 752 846 A1**
(43) Veröffentlichungstag der Anmeldung: **14.02.2007**
(21) Anmeldenummer: 05017156.0
(22) Anmeldetag: 06.08.2005
(51) Int. Cl.: G05B 19/4097

(54) **Verfahren zur Konstruktion eines flachen Zuschnitts für ein dreidimensionales Biegeteil**

(71) Anmelder: TRUMPF Werkzeugmaschinen GmbH + Co. KG, 71254 Ditzingen (DE)
(72) Erfinder: Riedewald, Sandra, 70597 Stuttgart (DE); Schwarz, Roman, 70825 Korntal-Münchingen (DE); Marx, Gregory, 64546 Mörfelden-Walldorf (DE); Baierl-Möhler, Monika, 71735 Nussdorf (DE)
(74) Vertreter: Kohler Schmid Möbus

(57) **Zusammenfassung**

Ein Verfahren zur Konstruktion eines zweidimensionalen flachen Zuschnitt für ein dreidimensionales Biegeteil wird mithilfe einer eine Anzeigeeinrichtung (5) und eine Eingabeeinrichtung (6) umfassenden Steuereinrichtung (4) einer Werkzeugmaschine (1) durchgeführt. Die Eingabeeinrichtung (6) umfasst Auswahltasten (11), anhand derer der Anwender, Werkstückflächen erzeugen und durch Anfügen von Laschen bearbeiten kann, welche an der Anzeigeeinrichtung (5) zweidimensional dargestellt werden Die Steuereinrichtung (4) erstellt die anzuwendenden, die Biegeumformungen betreffenden Korrekturen für den flachen Zuschnitt anhand von eingegebenen und/oder bereits gespeicherten Daten.

## Beschreibung

Die Erfindung betrifft ein Verfahren zur Konstruktion eines zweidimensionalen flachen Zuschnitts für ein dreidimensionales Biegeteil mithilfe einer eine Anzeigeeinrichtung und eine Eingabeeinrichtung umfassenden Steuereinrichtung einer Werkzeugmaschine.

Die Erfindung betrifft insbesondere das Schneiden eines flachen Zuschnitts als Zwischenprodukt für ein dreidimensionales Biegeteil mithilfe einer Stanzmaschine oder Laserschneidmaschine. Um ein Biegeteil zu fertigen, bedarf es zweier Arbeitsschritte. In einem ersten Schritt wird eine Platine mit einer Grundfläche erzeugt. In einem zweiten Schritt wird die Platine gebogen. Für den ersten Schritt, bei dem von dem dreidimensionalen Teil ausgegangen wird, ist eine Abwicklung des Teils erforderlich. Die Konstruktion liefert in der Regel nur eine Beschreibung des dreidimensionalen Teils, so dass die Abwicklung des Teils erst erstellt werden muss. Dazu existieren derzeit zwei Möglichkeiten. Man kann entweder das fertige Teil in einem 3D-CAD-Programm konstruieren und die Abwicklung automatisch berechnen lassen. Man kann die Abwicklung aber auch manuell erzeugen. Das erste Vorgehen hat den Nachteil, dass 3D-CAD-Programme aufwändig in der Bedienung sind. Eine Anwendung erfordert ein großes Wissen auf dem Gebiet des 3D-CAD-Programms. Das zweite Vorgehen ist ebenfalls sehr aufwändig, weil die Bearbeitungsdaten, wie beispielsweise Verkürzungswerte beim Biegen, vom Anwender beachtet werden müssen. Dies erfordert ein großes Fachwissen auf dem Gebiet der jeweiligen Technik, wie beispielsweise der Biegetechnik, und ist zudem sehr anfällig.

Aufgabe der Erfindung ist es daher, eine möglichst einfache Konstruktion des flachen zweidimensionalen Zuschnitts für ein dreidimensionales Biegeteil vorzustellen.

Diese Aufgabe wird durch ein Verfahren gemäß Patentanspruch 1 gelöst. Erfindungsgemäß muss der Anwender lediglich Auswahltasten der Eingabeeinrichtung betätigen, um zweidimensionale Flächen an der Anzeigeeinrichtung zu erzeugen und zu bearbeiten. Die erfindungsgemäße Steuereinrichtung ist einfach zu handhaben, weil der Anwender, ausgehend von dem dreidimensionalen Werkstück oder der Konstruktionszeichnung des Werkstücks, lediglich anhand der zweidimensionalen Darstellung arbeitet und das Werkstück zweidimensional weiterbildet. Notwendige Korrekturdaten für das entstehende dreidimensionale Teil muss der Anwender nicht berechnen, sondern sie werden von der Steuereinrichtung automatisch berücksichtigt.

Die Erfindung ist insbesondere für das Schneiden eines flachen Zuschnitts als Zwischenprodukt für eine dreidimensionales Biegeteil mithilfe einer Stanzmaschine oder Laserschneidmaschine geeignet. Die Erfindung kann aber auch in ähnlicher Weise bei einer Vielzahl herkömmlicher Werkzeugmaschinen oder auch Laserbearbeitungsmaschinen Anwendung finden.

Besonders vorteilhaft ist die Kombination der Erfindung mit dem Einsatz so genannter Technologietabellen, bei denen relevante Daten für die Werkstückbearbeitung in der Steuereinrichtung hinterlegt sind. Dies erleichtert die Werkstückbearbeitung und Werkstückkonstruktion zusätzlich.

Gemäß der Erfindung werden beispielsweise beim Konstruieren von Biegeteilen Abkantdaten, wie Verkürzungswerte, automatisch erzeugt. Der Anwender kann Grundflächen und Laschen durch Betätigen von Auswahltasten einfach erstellen und bearbeiten.

Ein Ausführungsbeispiel der Erfindung ist in der Zeichnung schematisch dargestellt und wird nachfolgend mit Bezug zu den Figuren der Zeichnung näher erläutert. Es zeigt im Einzelnen:
- **Fig. 1**: eine Stanzmaschine;
- **Fig. 2**: eine Eingabeeinrichtung der Stanzmaschine;
- **Fig. 3**: eine Abfolge einer zweidimensionalen Konstruktion eines flachen Zuschnitts für ein dreidimensionales Werkstück.

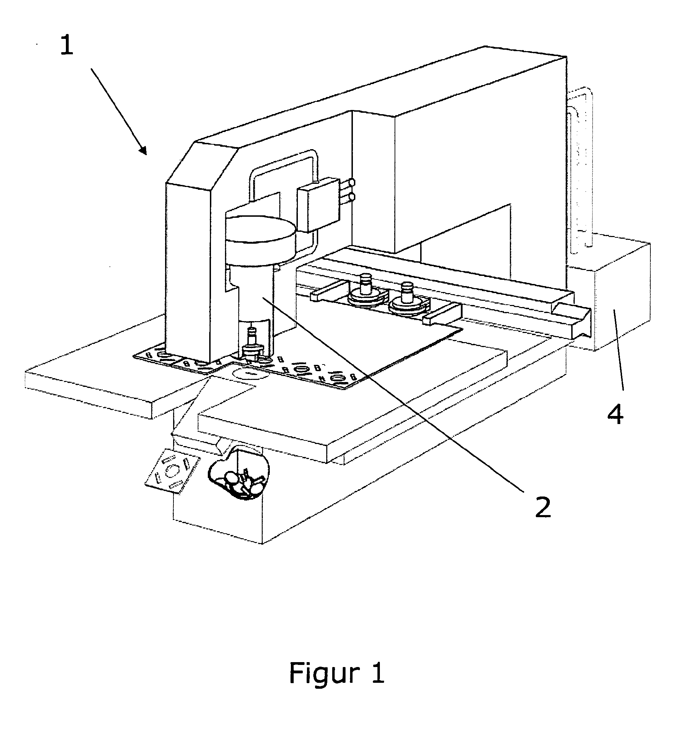

Aus der **Figur 1** ist der Aufbau einer Stanzmaschine **1** ersichtlich, welche im Wesentlichen eine Stanzeinrichtung **2** und eine Steuereinrichtung **4** umfasst.

Die Steuereinrichtung 4 mit einer Anzeigeeinrichtung und einer Eingabeeinrichtung ist mithilfe einer Datenleitung mit der Stanzmaschine verbunden.

Um nun ein durch eine Grundfläche und Laschen ausgebildetes Biegeteil aus dem flachen Werkstück zu fertigen, wird jede Lasche für sich wie eine zweidimensionale Zeichnung konstruiert. Zusätzlich wird die Verbindung der einzelnen Laschen mit der Grundfläche oder mit anderen Laschen definiert. Aus den eingegebenen Daten für die Laschen ermittelt die Steuereinrichtung 4 die anzuwendenden Abkantdaten und fertigt die Zeichnung für den Zuschnitt automatisch an, der anschließend mithilfe der Stanzeinrichtung 3 ausgeschnitten werden kann.

Die Steuereinrichtung 4 umfasst ein Display, eine CPU, einen Datenspeicher, eine Eingabeeinrichtung und eine Einrichtung zum Datenaustausch zur Stanzmaschine 1. Eine elegante Methode ist es, die Werte der verschiedenen Parameter, die für das Biegen von Bedeutung sind, als Technologiedaten in sog. Technologietabellen zu verwalten. Alle Tabellen werden zentral verwaltet und gepflegt und sind in der Steuereinrichtung 4 hinterlegt. In einer individuellen Tabelle oder Datenbank können zu Werkstoff, Blechdicke und Biegewerkzeugpaar auch die bevorzugten Freistiche festgelegt werden. Gemäß der individuell angelegten Tabelle oder Datenbank wird auch der zum Biegen erforderliche Verkürzungswert für das Biegen hinterlegt. Der Verkürzungswert lässt sich auch manuell ändern. Die Zuordnungstabelle kann ebenfalls über eine Auswahltaste angezeigt werden.

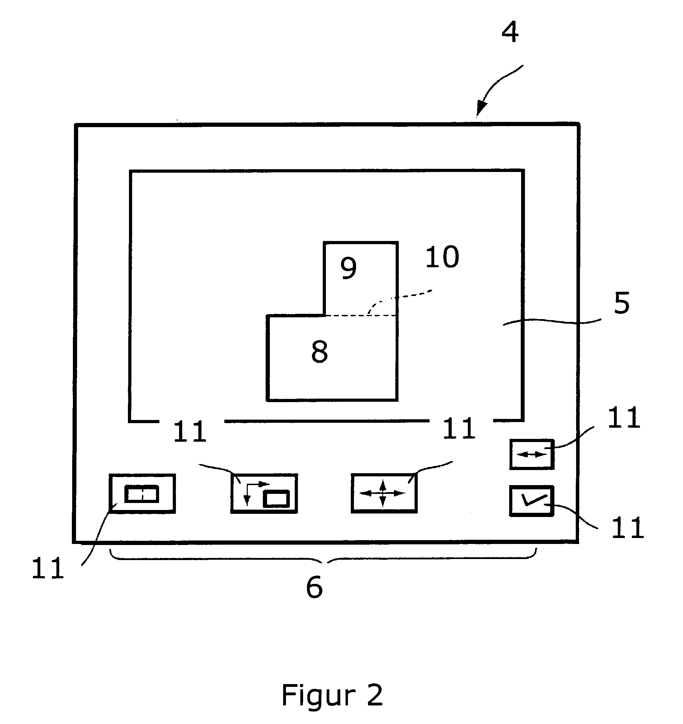

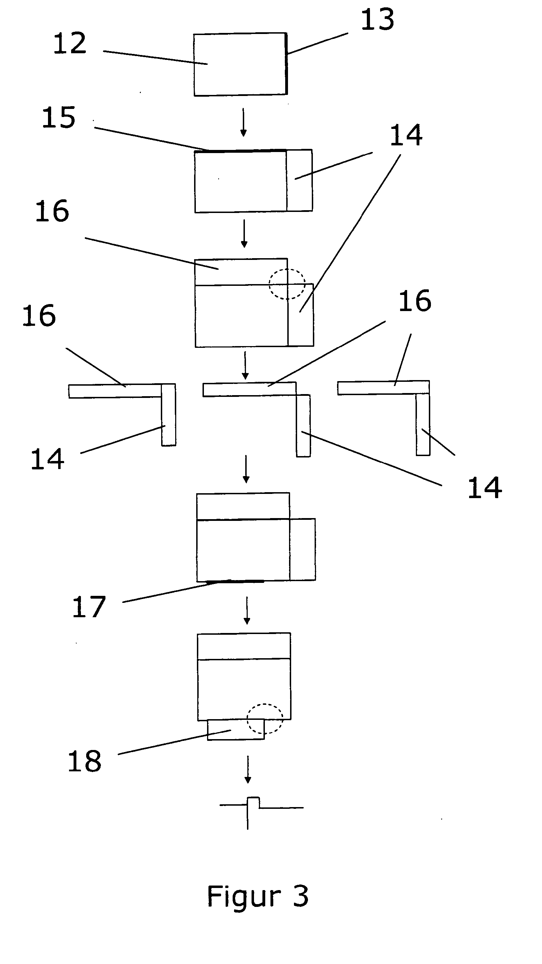

Anhand der **Figuren 2** und **3** wird nun das erfindungsgemäße Verfahren zur einfachen Konstruktion von Biegeteilen ohne dreidimensionalen Geometriekern beschrieben. Analog zu einer Art Baukastenprinzip werden die Grundfläche **8** und die Lasche **9** und Biegelinie **10** mithilfe von Auswahltasten **11** der Eingabeeinrichtung **6** einzeln zweidimensional bearbeitet und an der Anzeigeeinrichtung **5** dargestellt.

Figur 3 zeigt die Abfolge der Konstruktion eines flachen Zuschnitts für ein dreidimensionales Biegeteil. In einer nicht dargestellten Einstiegmaske wählt der Anwender zwischen einer Platine und einem Biegeteil aus. Wählt der Anwender "Platine", dann sind alle biegerelevanten Funktionen ausgeblendet.

Die Auswahl des Menüs "Lasche" mithilfe einer Auswahltaste 11 führt dazu, dass nach Eingabe der Höhe und Breite einer Grundfläche diese Grundfläche 12 an der Anzeigeeinrichtung 5 zweidimensional angezeigt wird. In einem ersten Schritt wird eine Kante **13** ausgewählt, an der eine Lasche angefügt werden soll. Die Maße der Grundfläche 12 gibt der Anwender ausgehend von dem dreidimensionalen Biegeteil ein. Die eingegebenen Daten sind die exakten Daten des fertigen dreidimensionalen Biegeteils. Der Anwender muss sich nicht um Abkantdaten wie Verkürzungen bei der Konstruktion des zweidimensionalen Zuschnitts kümmern. Die Maße des Biegeteils können vom Anwender anhand von Ansichten einer üblichen Konstruktionszeichnung eingegeben werden. Umrechnungen oder ähnliche Berücksichtigungen nachfolgender Biegeumformschritte bei der Erstellung der Zeichnung des flachen Zuschnitts werden von der Steuereinrichtung 4 erstellt. Nach erfolgter Eingabe der Maße durch den Anwender werden die notwendigen Korrekturen für die nachfolgenden Biegeumformschritte auf den flachen Zuschnitt übertragen, so dass die Zeichnung des flachen Zuschnitts erstellt werden kann. Automatisch werden weitere Bearbeitungsstellen, welche von den Korrekturen betroffen sind, ebenfalls korrigiert. Mithilfe der Steuereinrichtung erfolgt unter Berücksichtigung der Daten der nachfolgenden Biegeumformung sowohl eine Korrektur der Grundfläche als auch der Lasche.

Nach Auswahl der Kante 13 wird an dieser Kante 13 eine Lasche **14** angefügt. Stets erforderlich ist die Eingabe der Laschenhöhe ausgehend von dem fertigen dreidimensionalen Biegeteil. Von den drei anderen Maßen - Breite, Abstand von links und Abstand von rechts - sind jeweils nur zwei erforderlich.

Anschließend kann der Anwender eine weitere Kante **15** auswählen, um auch dort eine Lasche **16** einzufügen. Beide Laschen 14 und 16 erstrecken sich über die gesamte Länge der jeweiligen Kante. Der Anwender muss lediglich entscheiden, in welche Richtung die Lasche gebogen werden soll. Ob eine Lasche nach oben oder unten geht, ist an der Linienart zu erkennen. Der Biegewinkel ist im Sinne einer einfachen Handhabung auf 90° voreingestellt. Es ist aber auch denkbar, das beliebige Biegewinkel eingegeben werden können. Die Steuereinrichtung erkennt automatisch, wenn zwei Laschen aneinandergrenzen, wie beispielsweise die Laschen 14 und 16. Mithilfe entsprechender Auswahltasten kann der Anwender dann entscheiden, ob bzw. in welcher Weise sich die Laschen überlappen oder nur anstoßen sollen. Die Auswahl wird dem Anwender in einer Art symbolhaften Draufsicht auf das fertige Biegeteil angezeigt. Die symbolhafte Draufsicht ist entsprechend der Orientierung der Laschen in der zweidimensionalen Ansicht orientiert. Wenn eine Lasche existiert, ist die Auswahltaste "Löschen" aktiviert, um Vorgänge oder Eingaben rückgängig zu machen. Mithilfe weiterer Auswahltasten kann vor und zurück geblättert werden.

Der Anwender kann auch auswählen, über welchen Bereich einer Kante **17** sich die Lasche **18** erstrecken soll. Wie im letzten Teilbild der Abfolge am Beispiel der Lasche 18 gezeigt, werden Biegelaschen mit Freistichen versehen. Im Rahmen des erfindungsgemäßen Verfahren werden diese Freistiche von der Steuereinrichtung automatisch eingebracht. Die Gestalt und Größe der Freistiche werden in Tabellen in Abhängigkeit des Materials und der Materialdicke hinterlegt und beim Korrekturvorgang vor dem abschließenden Abspeichern des angepassten Werkstückes eingebracht.

Mithilfe der Auswahltasten und der entsprechenden Symbole ist auch das Einfügen von Innenkonturen in die Grundfläche und die Laschen möglich. Mithilfe der Auswahltasten wird die richtige Lasche ausgewählt. Wenn in die Grundfläche eingefügt werden soll, genügt einmaliges Drücken auf den Kopf "Grundfläche".

Analog dem Einfügen der Innenkonturen sind auch folgende weitere Funktionen möglich: Einfügen von Lochreihen, Auswahl von Lochformen, Auswahl von Koordinatensystemen, Stanzpunkte, Endpunkte, Lochabstände etc..

Nach Festlegung der Maße des Biegeteils wird der Knopf "Biegeteil fertig" gedrückt. Nun werden die mithilfe der Technologietabellen vordefinierten Biegeparameter wie Verkürzungswerte angezeigt und können gegebenenfalls abgeändert werden. Abschließend werden die die Biegeumformungen betreffenden Korrekturen wie Verkürzungen und Freistiche automatisch eingebracht und das so angepasste Werkstück abgespeichert. Die Konstruktion ist beendet. Vor der Fertigung der flachen Zuschnitts ist noch in bekannter Weise die Tafelbelegung festzulegen und die für den Schneidvorgang technologiespezifischen Arbeitsschritte zu definieren. Anschließend kann die Fertigung der Werkstücks beginnen.

## Patentansprüche

1. Verfahren zur Konstruktion eines zweidimensionalen flachen Zuschnitt für ein dreidimensionales Biegeteil mithilfe einer eine Anzeigeeinrichtung (5) und eine Eingabeeinrichtung (6) umfassenden Steuereinrichtung (4) einer Werkzeugmaschine (1), **dadurch gekennzeichnet, dass** die Eingabeeinrichtung (6) Auswahltasten (11) umfasst, anhand derer der Anwender, Werkstückflächen erzeugen und durch Anfügen von Laschen bearbeiten kann, welche an der Anzeigeeinrichtung (5) zweidimensional dargestellt werden, wobei die Steuereinrichtung (4) die anzuwendenden, die Biegeumformungen betreffenden Korrekturen für den flachen Zuschnitt anhand von eingegebenen und/oder bereits gespeicherten Daten erstellt.

2. Verfahren nach Anspruch 1, **dadurch gekennzeichnet, dass** die Werkzeugmaschine eine Stanzmaschine (1) oder eine Laserschneidmaschine ist.

3. Verfahren nach Anspruch 1 oder 2, **dadurch gekennzeichnet, dass** die anzuwendenden Korrekturen Verkürzungen und/oder Freistiche sind.

4. Verfahren nach einem der vorhergehenden Ansprüche, **dadurch gekennzeichnet, dass** Grundflächen (8) und Laschen (9) für Biegeteile mithilfe der Eingabeeinrichtung (6) ausgewählt und bearbeitet werden können.

5. Verfahren nach einem der vorhergehenden Ansprüche, **dadurch gekennzeichnet, dass** in der Steuereinrichtung (4) Technologiedaten für die Bearbeitung des Werkstücks hinterlegt sind.

6. Verfahren nach einem der vorhergehenden Ansprüche, **dadurch gekennzeichnet, dass** aneinander grenzende Laschen von der Steuereinrichtung erkannt und eine Auswahl möglicher Überlappungsgeometrien der zugehörigen Werkstückecken vorgeschlagen wird.

7. Verfahren nach einem der vorhergehenden Ansprüche, **dadurch gekennzeichnet, dass** eine Auswahl möglicher Überlappungsgeometrien der Werkstückecken mit aneinander grenzenden Laschen vorgeschlagen wird, und die Orientierung der Geometrien der Orientierung der ausgewählten Ecke entsprechend angezeigt werden kann.

8. Steuereinrichtung der Durchführung des Verfahrens nach einem der vorhergehenden Ansprüche.
